# EUROPEAN PATENT APPLICATION

(11) **EP 2 253 199 A2**
(43) Date of publication of application: **24.11.2010**
(21) Application number: 10161743.9
(22) Date of filing: 03.05.2010
(51) Int. Cl.: A01G 1/08

(54) **Assembly kit for the frame of a plant base**

(30) Priority: 20.05.2009 FI 20095564
(71) Applicant: Kekkilä OY, 04300 Tuusula (FI)
(72) Inventor: Paakkanen, Mikko, 00560, HELSINKI (FI); Sivula, Eeva, 20100, TURKU (FI); Salmela, Petri, 07310, SANNAINEN (FI); Bergroth, Linda, 00150, HELSINKI (FI); Aalto, Klaus, 00520, HELSINKI (FI); Hara, Ville, 00140, HELSINKI (FI)
(74) Representative: Helke, Kimmo Kalervo

(57) **Abstract**

Assembly kit, which is intended for constructing a plant-base (2) delimitation structure, in which there are walls (1) intended to form side supports for the plant base (2), comprising wall elements (1) attached at the corner to each other, as well as a strip element (4) belonging to each corner joint. The strip element (4) fits on the inside of the corner joint, into a guide slot (6) made, preferably at a distance from the corner of the joint, in each of the wall elements (1) to be attached to each other, in such a way that the strip element (4) installed in the guide slot (6) reinforces the corner joint (5) and restricts the movement of the wall elements (1) relative to each other.

## Description

The present invention relates to an assembly kit, which is intended for constructing a plant-base delimitation structure, in which there are walls intended to form side supports for the plant base, at least some of which are set at an angle to each other, in which the assembly kit comprises wall elements attached at the corner to each other, as well as a strip element belonging to each corner joint, which fits on the inside of the corner joint, into a guide slot, preferably at a distance from the corner of the joint, made in each of the wall elements to be attached to each other, in such a way that the strip element installed in the guide slot reinforces the corner joint and restricts the movement of the wall elements relative to each other.

Plants, especially flowers, are often cultivated in so-called raised beds, i.e. cultivation beds, which are formed in such a way that a border of planks, stones, or some other material is arranged around a plant base set on the surface of the ground. The seeds or seedlings of all kinds of plants suitable for this type of cultivation can be planted in raised beds.

The idea of a raised bed is to create favourable growth conditions rapidly. In spring, growth is started rapidly in a raised bed, without having to wait for frost to thaw. Often, it is not even necessary for a cavity to be dug in the ground, though this may be advantageous for some plants. In order to create a neat border for a raised bed, a kit that can be assembled simply is required. Such assembly kits are not available commercially, instead the border of the raised bed is generally made from whatever material is available at the time - planks, stones, metal sheets - which is labourious and often leads to a result that is not of secondary value aesthetically. After the growing season, the border material that has been used temporarily is generally disposed of.

Solutions according to the prior art, in which there is an external corner piece, are disclosed in publications JP 2004238948, GB 109,190 A, and US 2,146,784. However, these solutions are of secondary value aesthetically. Solutions according to the prior art, in which there are vertical elements directly at the corner, are disclosed in publications EP 1897995 A1, EP 1020109 A2, and EP 0517117 A1. However, in these solutions, the attachment elements are of a complicated construction.

Publication DE 2163088 discloses a solution that is aesthetically integrated externally, in which there is a corner joint achieved with the aid of a special slanting binder component inside the corner and the surface components, which includes a locking piece and a locking slot. However, in order to work, the solution demands a complicated locking piece and a locking slot, which is difficult to manufacture, which complicates the manufacture of the solution.

The invention is intended to create a simple assembly kit, from which a neat and sturdy raised-bed border can be quickly and easily built and, after this, also dismantled, without tools and without breaking the kit components. In addition, the intention is to create an externally aesthetically integrated raised bed. The assembly kit comprises a set of wall elements, for example, planks, and a set of strip elements to be installed in guide slots in the wall elements to secure them to each other, which strip elements are dimensioned in such a way that they can be placed in the guide slots of at least two wall pairs set on top of each other at a corner. At the ends of the wall elements is an end joint permitting a suitable corner joint at the end of one of the wall elements, which is arranged to prevent the wall joints moving vertically relative to each other. The characteristics of the invention are stated in detail in Claim 1. The invention also brings with it the advantage that the dismantled assembly kit is immediately ready for reuse once it has been cleaned. In addition, the assembly kit according to the invention provides many possibilities for building borders of different shapes. The assembly kit can be used only in part, if it is wished to have an border only partly surrounding the plant base, while assembly kits can be combined, if an extensive or complicated border is desired.

According to the invention, the wall elements can be installed on top of each other in two or more layers, in order to create a sufficiently high border. In that case, it is preferable for the strip elements of the assembly kit to be dimensioned in such a way that they can be placed two on top of each other in the guide slots of the pair of wall elements set in the corner. As one strip element then acts as the binder element of the wall elements in two layers, the number of components in the assembly kit is reduced.

By arranging the guide slots of two wall element in such a way that, when the elements are placed in a corner joint, the guide slots will be mainly on the same vertical plane, the advantage will be gained that the strip element to be placed in the slots can be flat.

One preferred embodiment of the assembly kit according to the invention is such that the wall elements are dimensioned and shaped to form a closed frame, preferably a rectangular or square frame. The components of the assembly kit will then be simple and even an inexperienced person will be able to assemble the assembly kit correctly.

If the wall elements of the assembly kit are dimensioned and shaped to form a closed frame, preferably a frame with a rectangular shape, it will be preferable for there to be a suitable end joint or similar permitting a corner joint at the end at one of the wall elements, which is arranged to prevent the wall elements from moving vertically relative to each other. The border assembled from the wall elements will then be more certain to remain intact in the desired position. The end joint in question can be toothed, a conventional finger joint, a simple mortice and suitable tenon, or some other structure preventing vertical movement. If the wall elements are joined to each other in a straight line, i.e. with one element as a continuation of the other, it is preferable to use a dovetailing in the joint, which will prevent longitudinal movement of the wall element. Dovetailing can also be used in a corner joint.

The invention can be applied to the construction of both a rectangular frame and of a frame, the corners of which deviate from a right angle. The strip elements intended for a right-angle corner joint are preferably mainly flat, at least in the part embedding into the guide slot.

According to one embodiment, in the strip elements intended for a corner joint deviating from a right angle, at least the part of the strip element to be installed in the guide slot are bent relative to each other to an extent determined by the angle of the joint. This means that different construction angles can be easily created by appropriately bending strip elements of a suitable width, which for its part increases the possibilities for using the assembly kit for different purposes. It can be envisaged that a strip element according to a specific angle can be available for each polygon.

The strip elements are preferably in a friction contact with the guide slots of the wall elements, i.e. there is a tight force-fit between them. If it is wished to increase the friction between the guide slots and the strip elements, the mainly flat strip elements can be made flexible to some extent and shaped in such a way that their longitudinal axis deviates slightly from a straight line, preferably as a curve. This simple measure, which increases costs only a little, will lead to the friction contact of the strip elements with the guide slots remaining relatively certain, even over a long period of use. The strip elements can also be shaped with a curve in the width direction.

If it is wished that the border according to the invention is anchored in the ground, the strip elements can be dimensioned in such a way that they can penetrate into the ground below the lowest wall element. It will then be preferable for the lowest part of the strip element to be shaped to easy penetrate the ground, for example, to have a V shape, and perhaps also be sharpened. If the ground is, for example, rock, into which the strip element will not penetrate, the lowest part of the strip element can be bent inwards parallel to the ground surface under the raised bed, so that it is also partly supported by the soil inside the frame. In order to facilitate bending, a hole can be made in the strip element at the location of the bend.

In order to facilitate dismantling a frame assembled from an assembly kit according to the invention, it is preferable for there to be a lifting hole, threshold, or similar at the upper end of the strip elements, from which a grip can easily be obtained, if it is wished to pull the strip element out of the guide slot of the wall elements.

The assembly kit according to the invention can be simplified, in such a way that it can be used equally well for constructing a frame formed of wall elements placed in one or many layers. This advantage is achieved in such a way that the guide slots of the wall elements are made sufficiently loose for the strip element of a wall-element pair placed on top of a corresponding wall-element pair placed at a corner joint to be able to partly penetrate into the guide slot of the lower wall-element pair. Strip elements of only a single length will then be required. In the assembly kit according to the invention, the combination of a end joint of a strip element creates a surprisingly good structural stiffness for a corner joint, even without screws.

In the following, the invention is described in greater detail with reference to the accompanying drawings, in which
- Figure 1: shows a perspective view of a raised bed, in which the border of the raised bed is assembled from an assembly kit according to the invention,
- Figure 2a: shows a perspective view of the first stage of join- ing two wall elements of an assembly kit according to the invention,
- Figure 2b: shows a perspective view of the installation of a strip element in a two-layered wall,
- Figure 3: shows a perspective view of the application of a second assembly kit according to the invention as a two-layered construction,
- Figure 4: shows a perspective view of the strip elements of the assembly kit according to the invention installed on top of each other,
- Figure 5: shows a cross-section V-V of Figure 4 and a top view of an installed wall-element layer,
- Figure 6: shows the wall elements of Figure 5 from the inside of a corner.

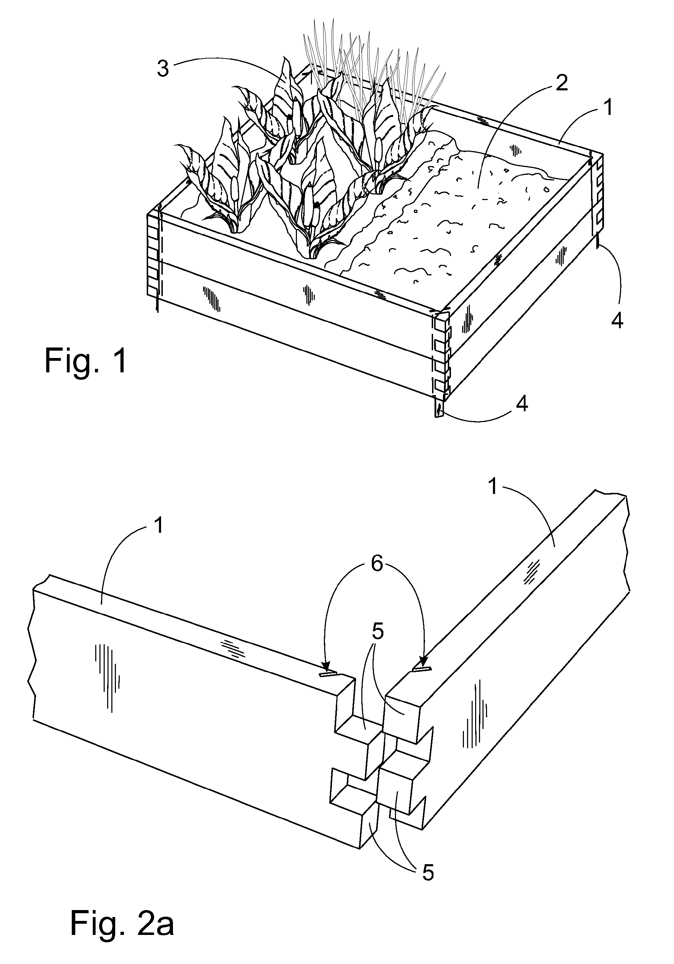

Figure 1 shows the general application of the invention to the construction of the border of a raised bed. The reference number 1 refers to a wall element made of planks, installed in two layers of the border. The plant base 2, in which a few seedlings 3 are planted, is surrounded by them. The strip elements 4 of the border are seen more clearly in the other figures. Eight plank elements and four strip elements are sufficient for constructing a border of two layers, as shown. Four plank elements and four strip elements will be enough for a single-layer border.
Figure 2a shows the joining in a right angle of two wall elements 1 of the assembly kit according to the invention. At the end of both wall elements is a end joint 5 formed by a finger joint. The figure also shows the guide slots 6 intended to receive a strip element. The end joint 5 can also be, for example, toothed.

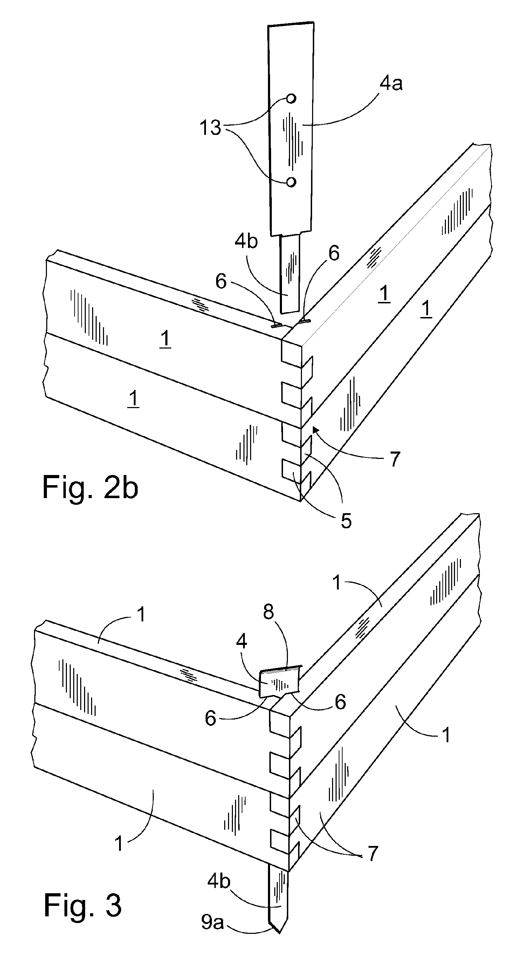

Figure 2b shows the joining of wall elements 1 of the assembly kit according to the invention in two layers, which are bound by a common strip element 4 installed from above. The figure shows the finger joints 7 of the wall elements assembled in their final form, the toothing 5 and other details of which can be better seen in Figure 2a.

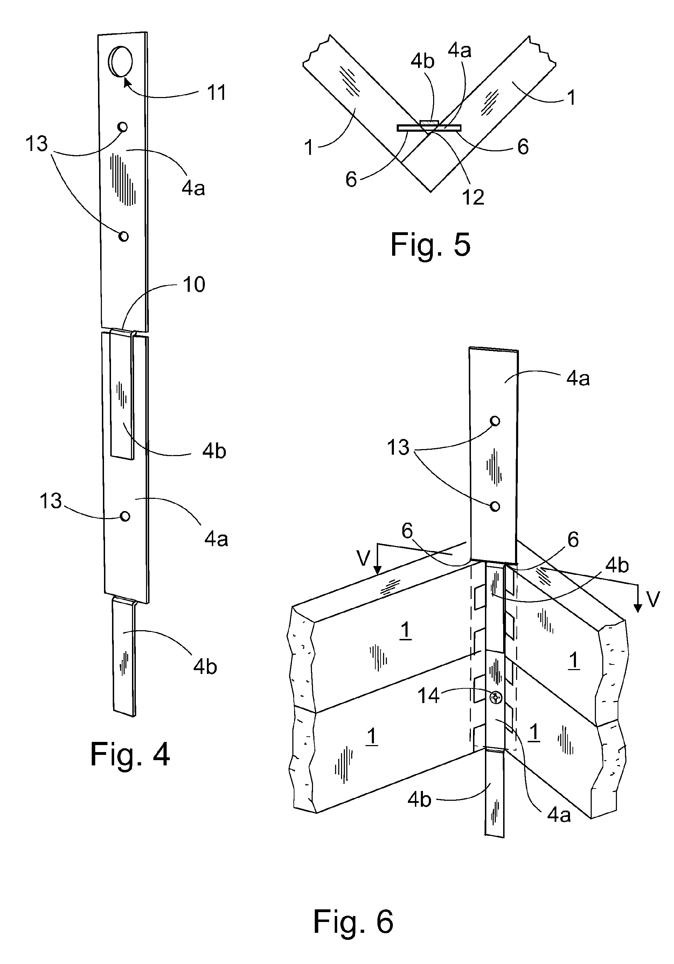

In the embodiment shown in Figure 3, the lower end 4b of the strip element 4 is intended to penetrate into the ground under the wall elements, in order to anchor the frame formed by the wall elements 1 in it. The lower end 4b also has a second function, which is explained in connection with Figures 5 and 6.

Figure 3 shows wall elements 1 of the assembly kit according to the invention joined in two layers, as in Figure 2b. The strip element 4 shown in the figure has a shape that differs somewhat from the strip elements shown in Figures 1 and 2b. In Figure 3, there is a short lifting flange 8, bent towards the finger joint 7, at the upper end of the strip element, from which a good grip can be obtained when it is wished to pull the strip element 4 out of the guide slot 6. The flange can equally well be bent in the opposite direction. In the embodiment shown in Figure 3, the lower end 4b of the strip element 4 is sharpened, so that it will easily penetrate the ground for anchoring. Thus, there is a V shaped sharpened point 9a at the lower end 4b of the strip element.

The guide slots 6 are dimensioned in such a way that there is a tight fit between the guide slots 6 and the strip elements 4. A strip element can normally be installed in the guide by hand, but if the wall element is, for example, timber, and has swollen slightly due to moisture, a rubber hammer, for example, will probably be needed for installation. The strip element 4 remains in place in the guide slot 6 on the basis of friction. The strip element 4 is not locked in the slot by force.

Relative to its longitudinal axis, the strip element can be slightly curved, so that the tight fit will become tighter. The strip element can be flat in shape, but it can also have a bend in it, or it can also be curved.

Figure 4 shows strip elements 4a of the assembly kit according to the invention, installed on top of each other. These strip elements are used, if it is wished for only one type of strip element to be in the assembly kit, but nevertheless to install the wall elements 1 can as well be installed in many layers as in just one or two layers. In the strip elements 4a, there is a narrower lower part 4b, which, at the step 10, is stepped sideways from the main plane by the thickness of the material, so that two strip elements 4a can be set on top of each other in the manner shown in Figure 4. The narrower lower part 4b can equally well be shaped in the manner shown in Figure 3. In the upper part of the strip element 4a, there is a lifting hole 11, which corresponds to the lifting flange 8 shown in Figure 3. The lower part 4b of the lowest strip element penetrates the ground, in order to anchor the frame, as described above.

Figure 5 shows a top view of how a strip-element combination is set in a wall-element corner, according to Figure 4. In the figure, the cross-section V-V of Figure 6 is shown at the upper surface of the uppermost wall-element layer. The narrower lower part 4b of the uppermost strip element is set on top of the main part of the strip element 4a, inside the frame. It would also be possible to dimension the lower part 4b to fit on the side of the corner, but in that case the guide slots 6 should be farther from the corner location 12. This would to some extent increase the shape stiffness of the structure.

In Figure 6, the structure is seen from inside the frame, in such a way that the upper strip element 4b for a third and fourth layer is shown to be separate, so that it can be seen how its lower part 4b lies inside on top of the lower strip element. The lower strip element 4a is in the slot 6 of the walls 1, so that only a narrow piece of it is visible, the width of which in this case corresponds to the width of the lower part 4b. The invention is not restricted to the embodiments described, but instead several variations of the invention can be envisaged within the scope of the accompanying Claims.

According to the embodiment of Figure 6, the attachment of the strip element 4 can be ensured with the aid of screws 14. The screws 14 can be one or several and they can be attached to the wall 1 through holes 13 in the strip element 4. Instead of screws, some other attachment element suitable for the purpose, for example a nail, can be used. The walls can also be joined without an attachment element. If some material other than soil is used in the raised bed, the joints at the corners can be reinforced, for example, using separate angle irons.

## Claims

1. Assembly kit, which is intended for constructing a plant-base delimitation structure, in which there are walls intended to form side supports for the plant base, at least some of which are set at an angle to each other, in which the assembly kit comprises wall elements (1) attached at the corner to each other, as well as a strip element (4) belonging to each corner joint, which fits on the inside of the corner joint, into a guide slot (6), preferably at a distance from the corner of the joint, made in each of the wall elements (1) to be attached to each other, in such a way that the strip element (4) installed in the guide slot (6) reinforces the corner joint and restricts the movement of the wall elements (1) relative to each other, **characterized in that** the strip elements (4) are dimensioned in such a way that they can lie in the guide slots (6) of a wall pair (1, 1) placed at least two on top of each other and at the ends of the wall elements (1) there is a end joint (5) permitting a suitable corner joint, which is arranged to prevent the vertical movement of the wall elements (1) relative to each other.

2. Assembly kit according to Claim 1, **characterized in that** the strip elements (4) intended for a right-angled corner joint are mainly flat, at least in the part embedded in the guide slot (6).

3. Assembly kit according to Claim 1 or 2, **characterized in that** the guide slots (6) of the opposing elements of two wall elements (1) placed in a corner joint are mainly in the same vertical plane.

4. Assembly kit according to any of Claims 1 - 3, **characterized in that** the wall elements (1) are dimensioned and shaped to form a closed frame, preferably a rectangular or square frame.

5. Assembly kit according to any of Claims 1 - 4, **characterized in that** a tight fit is arranged to be formed between the said strip elements (4) and the said guide slots (6), in order to hold the said strip elements (4) and the said guide slots (6) in place.

6. Assembly kit according to any of Claims 1 - 5, **characterized in that** the mainly flat strip element (4) is flexible and deviates slightly from a straight line on its longitudinal axis, preferably being curved, so that, due to its said shape, the strip element is forced into a friction contact with the side surface of the guide slots.

7. Assembly kit according to any of Claims 1 - 6, **characterized in that** the strip elements (4) are dimensioned in such a way that they can penetrate into the ground below the lowest wall element (1) and preferably also in such a way that the lowest part (4b) of the strip element is shaped to easily penetrate into the ground.

8. Assembly kit according to any of Claims 1 - 7, **characterized in that** at upper end of the strip element (4) there is a lifting hole (11), threshold, or similar, which facilitates pulling the strip element (4) out of the guide slot (6) of the wall elements.

9. Assembly kit according to any of Claims 1 - 8, **characterized in that** the guide slots (6) of the wall elements (1) are far enough from the corner point (12) formed by the wall-element pair (1, 1) placed in a corner joint, that the narrower lower part (4b) of the strip element will fit between the main part (4a) of the strip element and the corner point (12).
